**Europäisches Patentamt**

(19) **European Patent Office**

**Office européen des brevets**

(11) Publication number: **0 083 243**
**B1**

(12) **EUROPEAN PATENT SPECIFICATION**

(45) Date of publication of patent specification: **02.09.87**

(51) Int. Cl.⁴: **G 01 C 22/00, G 12 B 9/02**

(21) Application number: **82306978.6**

(22) Date of filing: **24.12.82**

(54) **Hubodometer.**

(30) Priority: **28.12.81 US 335159**

(43) Date of publication of application:
**06.07.83 Bulletin 83/27**

(45) Publication of the grant of the patent:
**02.09.87 Bulletin 87/36**

(84) Designated Contracting States:
**DE FR GB**

(56) References cited:
**DE-A-2 842 453**
**FR-E- 20 986**
**US-A-2 638 274**
**US-A-3 195 545**
**US-A-3 356 298**

(73) Proprietor: **STANDARD CAR TRUCK COMPANY**
**865 Busse Highway**
**Park Ridge Illinois (US)**

(72) Inventor: **Powell, Patrick L.**
**2644 Willow Street**
**Franklin Park Illinois 60131 (US)**

(74) Representative: **Roos, Michael John et al**
**KILBURN & STRODE 30 John Street**
**London WC1N 2DD (GB)**

Courier Press, Leamington Spa, England.

# Description

The present invention relates to hubodometers which are for example used to measure and indicate the elapsed mileage travelled by various vehicles. An example of such hubodometer is shown in Specification US—A—2638274. When existing hubodometers are applied to the wheels of a railroad, highway, or off-road vehicle, they tend to be subjected to abusive shocks and vibrations which greatly impair the useful life of these devices and also the accuracy of their readings. The replacement of a defective and inaccurate hubodometer is an expensive and time consuming task. It has been found that present hubodometer designs tend to fail prematurely largely because the casing containing the odometer assembly is not shock mounted with a weight and force balanced design, and also because the odometer indicator is not similarly balanced within the mechanism. Thus it is found that the forces generated by shocks and vibrations tend to set up destructive torques. Additionally in many designs of hubodometer the mechanism is supported on a cantilevered element such as a projecting drive shaft and in these designs the weight on the cantilevered element also tends to generate unbalanced forces that greatly shorten the operating life of the hubodometer.

US—A—2638274, mentioned above, discloses the features set out in the preamble to the independent claims.

US—A—3196545 describes a cantilever-mounted mechanism which includes a set of three elongate elastic members which support a mounting member. This mounting member rests firmly on the wheel via an annular support 38. The cantilever-type attachment tends to transmit vibrations to the counter mechanism.

FR—E—20986 also describes a mechanism which has a rigid cantilevered attachment to a wheel via a number of bolts which mechanically couple the wheel hub to the counter mechanism. This rigid mechanical connection tends to transmit vibrations between the hub and the counter mechanism.

According to one aspect of the present invention a hubodometer comprises a rotary casing arranged to be secured to a rotary object, and an odometer mechanism mounted in the casing for rotation therewith, characterised by a rotary support defining a cavity within which the casing is located by annular resilient mounting means which surrounds the casing and which is positioned between the casing and the cavity, and which serves to transmit rotary motion from the support to the casing.

According to a second aspect of the invention, a hubodometer comprises a rotary casing arranged to be secured to a rotary object, and an odometer mechanism mounted in the casing for rotation therewith, characterised in that the casing is formed by two joined cup-like shells each having a circular flange integrally formed at the mouth of the shell and lying against the flange of the other shell, a resilient gasket seated upon the joined flanges and a rigid retainer ring seated on the gasket and fitting tightly into a circular wall of a cavity of a rotary support, in order resiliently to support the casing in the cavity, and to constitute rotary drive means between the support and the casing.

According to a third aspect of the invention, a hubodometer assembly comprises a rotary casing arranged to be secured to a rotary object and containing an odometer mechanism, characterised in that the casing is an enclosed structure having a circular peripheral region, said peripheral region being spaced from a surrounding annular recess in a support which is arranged to be secured to the rotating object, and an annular resilient mount located between said circular peripheral region, the annular mount providing the sole support for the casing and through which all rotary motion is transmitted between the support and casing.

It is found that the specific designs according to the present invention which employ an annular shock mount as the sole means for supportively coupling a casing which contains the odometer mechanism, to a wheel mount support, overcome many of the known disadvantages. The shock mount may for example comprise an elastic-like gasket contained within a rigid retainer ring which envelopes the gasket. The ring like shock mount may be tightly fitted between an inner socket wall of the support and a set of projecting and mating flanges of the odometer mechanism casing. Preferably the casing and the weight of the odometer mechanism assembly therein are generally weight balanced about the usual vertical plane of the shock mount. Accordingly destructive torques which would tend to rotate the casing relative to its support are substantially reduced.

Further advantages are obtained by employing a drive gear shaft located within the casing with both shafts ends anchored to the casing thus eliminating a cantilevered drive element. The odometer mechanism assembly preferably also includes a U-shaped frame that carries a driven gear shaft which engages the drive gear shaft at a right angle thereto. Thus the odometer mechanism assembly may be carried on the drive gear shaft and be generally weight balanced on the shaft to minimise further destructive torques.

By fabricating the casing with two identical cup-like shells which have circular flanges integrally formed at the mouth of the shells and lying against one another it is possible to encase the casing with a combined seal and mount which provides an efficient hermetic seal and an efficient shock mount for locating the assembly within a cavity of the support. Such an arrangement considerably assists in providing a mechanism which is substantially tamper proof.

The invention may be carried into practice in various ways but one specific embodiment will now be described by way of example with reference to the accompanying drawings in which:—

Figure 1 is a perspective view of a hubodometer according to the present invention;

Figure 2 is a front elevation of the hubodometer fixed to a wheel hub;

Figure 3 is a sectional side elevation taken on the line 3—3 of Figure 2 and showing the details of a shock-mount structure for the encased odometer mechanism assembly and also engagement of a drive gear-shaft and a driven gear-shaft of the assembly;

Figure 4 is a front elevation of the odometer mechanism assembly with a central portion of the face dial broken away;

Figure 5 is a plan view of the structure of Figure 4;

Figure 6 is a side elevation of the structure of Figure 4 as viewed from the right hand side;

Figure 7 is a side elevation of the structure of Figure 4 as viewed from the left hand side;

Figure 8 is a front elevation of one of two identical cup-like shells forming the casing for the odometer mechanism assembly;

Figure 9 is a sectional side elevation of one casing shell, taken along the line 9—9 of Figure 8;

Figure 10 is a sectional plan taken on the line 10—10 of the shell of Figure 8;

Figure 11 is an exploded view showing the cup-like shells of the casing separated, together with a neoprene mounting gasket, and a retainer ring for the gasket;

Figure 12 is a side elevation of the drive gear shaft, and

Figure 13 is a side elevation of the driven gear shaft.

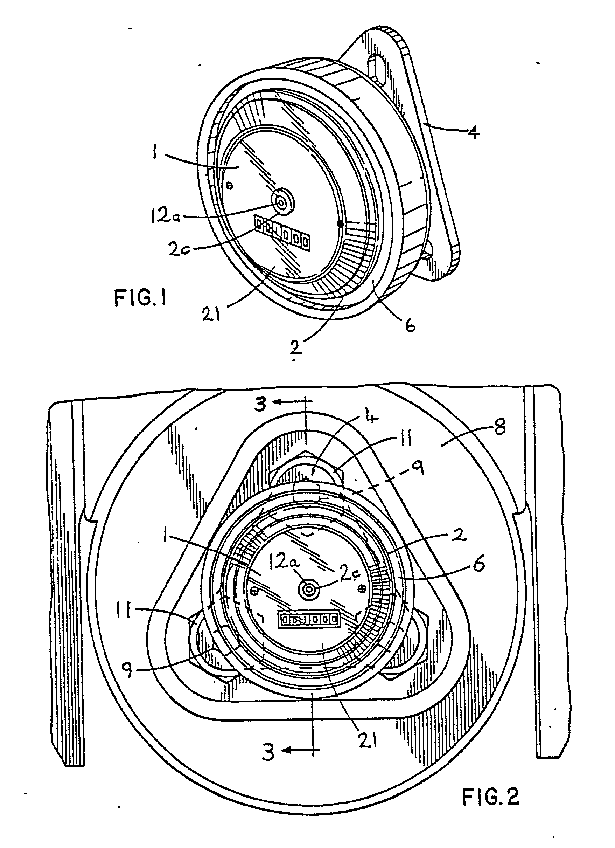

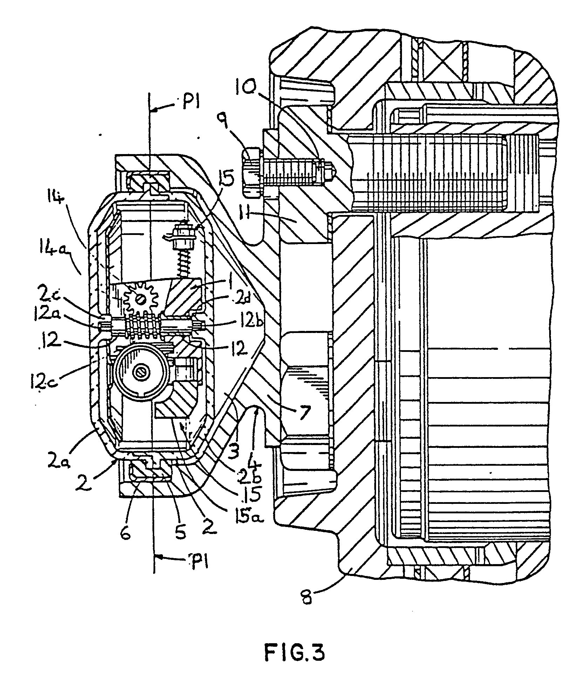

Referring firstly to Figure 3, this shows, on the right hand side, a rotary wheel cover plate 8 which is secured to a wheel by three cover plate bolts 11 located in triangular relationship to one another as shown in Figure 2. As shown in Figure 3, each of these bolts had a threaded bore 10 to receive a bolt 9 by means of which a triangular base 7 of a metallic mounting bracket 4 is secured. The mounting bracket, as shown in Figure 3, defines a cup-like socket 3 in which a plastics casing 2 is located, the casing enclosing an odometer mechanism assembly 1. The casing 2 for the odometer mechanism assembly is located within the socket 3 by means of an annular NEOPRENE (Registered Trade Mark) gasket 5 which in turn is located within a metallic retainer ring 6, also shown on the left hand end of Figure 11. The retainer ring 6 provides the sole support for the odometer mechanism casing 2 on the mounting bracket 4 and by virtue of the manner in which the mounting bracket 4 is secured to the wheel cover plate 8, rotation of the cover plate 8 produces a corresponding rotation of the bracket 4 and the odometer mechanism casing 2.

The odometer mechanism casing 2 is formed by two identical mouldings of transparent plastics material best seen in Figure 11. Thus the casing is formed by two identical cup-like shells 2a and 2b, each of which is fabricated with two projecting lugs 2e and 2f and two lug receiving recesses 2g and 2h. In addition, a circular flange 2j, k is formed at the mouth-like rim of each shell 2a and 2b.

When the two casing shells are mated by inserting the lugs 2e and 2f of one shell into the respective recesses 2g, 2h of the other shell, as shown in Figure 3, the flanges 2j and 2k of both shells are in close contact. The NEOPRENE gasket 5 is of generally U-profile in cross-section and surrounds the abutting flanges 2j and 2k of the casing shells and serves to secure them together and to provide a seal around them. The gasket also provides a resilient mount by which the casing 2 is located within the cup-like socket 3. For this purpose, the metallic retainer ring 6 which surrounds the NEOPRENE gasket 5, is the form shown at the left hand end of Figure 11 and this ring 6 is seated on the gasket 5 and forceably nests the retainer ring 6 and its engaged casing 2 within the socket 3 of the mounting bracket 4. In a commercial embodiment, the engagement effected by the shock mount elements 5 and 6 is so secure that the odometer casing 2 can only be removed from the socket 3 of the bracket 4 by damaging the casing 2. Accordingly, undetected tampering with the hubodometer to effect an erroneous reading cannot be achieved.

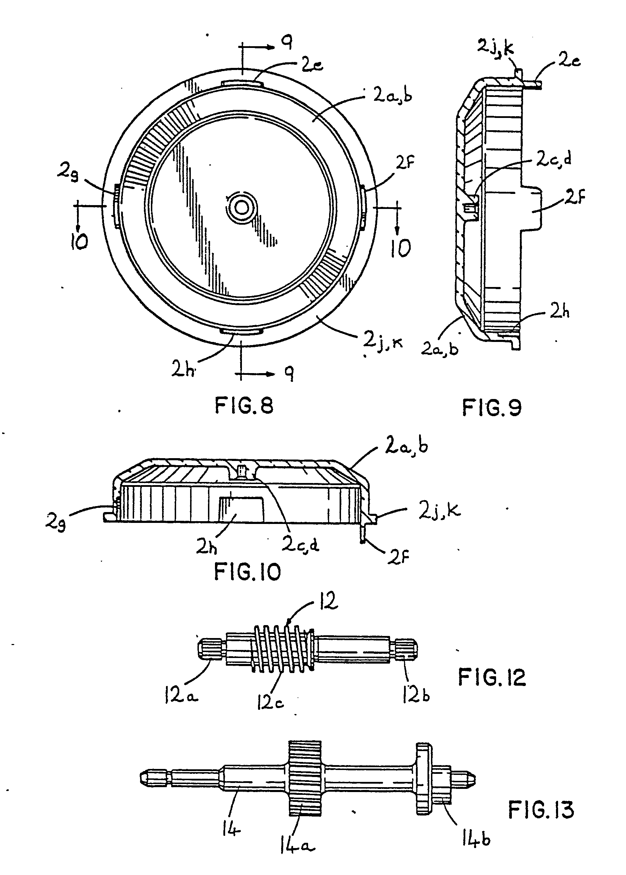

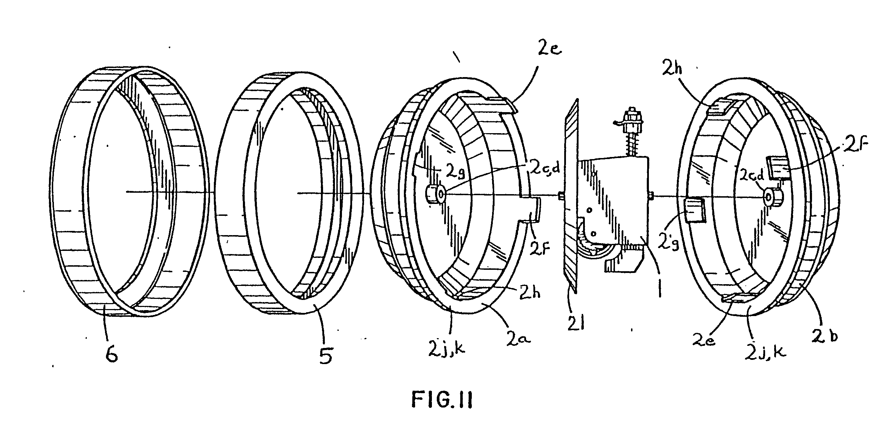

As shown in Figure 11 the casing shells 2a and 2b are respectively provided with bosses 2c, 2d at their centres, these bosses having central bores to receive the knurled extremities 12a and 12b of a drive gear shaft 12 shown in detail in Figure 12. The drive gear shaft 12 extends across the internal cavity defined by the casing 2 in alignment with the axis of rotation of the composite wheel cover plate 8, mounting bracket 4, and the casing 2. As a result the drive gear shaft 12 rotates when the casing 2 rotates.

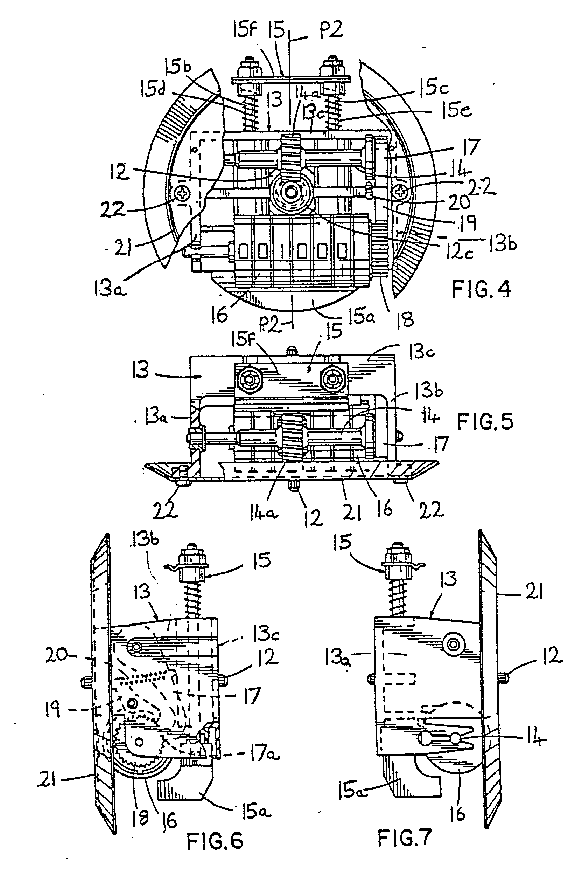

The remainder of the odometer mechanism assembly is so arranged that it is supported on, and driven by, the drive gear shaft in order to record revolutions of the drive gear shaft. The nature of the remainder of the mechanism is such, however, that it does not rotate bodily with the casing 2 but maintains a substantially upright position therein. For this purpose, as will be described, the remainder of the mechanism, whilst solely supported by the drive gear shaft, has a centre of gravity which lies well below the shaft 12. Thus the odometer mechanism assembly 1 also includes a U-shaped plastics frame 13 (best seen in Figures 4 to 7), the frame 13 providing a pair of spaced parallel arms 13a and 13b connected at one end by a transverse section 13c. The drive gear shaft 12 extends loosely through the transverse section 13c.

Extending at right angles to the drive gear shaft 12 is a plastics driven gear shaft 14, the ends of which are rotably journalled in the arms 13a and 13b of the frame 13. The centre portion of the shaft 14 is formed with an integral helical driven gear 14a which engages a drive worm gear 12c integrally formed on a central portion of the drive shaft 12.

The odometer mechanism assembly 1 includes a conventional centrifugal weight assembly 15 which includes a lead weight 15a seen in the lower parts of Figures 3, 4, 6 and 7. The weight 15a is coupled to two parallel elongate shafts 15b and 15c each passing through a separate bore in the base section 13c of the frame 13 and having springs 15d and 15e respectively enveloping the ends of the shaft projecting outside the base section 13c of the frame. The shafts 15b and 15c are coupled by a shaft tie plate 15f (Figure 4) so that both shafts move in unison. As is well known in the hubodometer art, the position of the centre of gravity of the parts which are supported by the shaft 12, and the dynamic effect of the weight of 15a is to maintain the frame 13 in a stable attitude when the wheel to which the mechanism is attached rotates. The springs 15d and 15e are normally in an expanded elongated condition of Figure 4 which causes the weight 15a to assume a retracted position relative to the frame 13.

The mechanism includes an odometer register 16 having six odometer wheels driven by conventional Geneva mechanism and carrying numerical indicia which may be calibrated to give a read out of the number of wheel rotations, distance travelled etc. The register 16 has a face dial 21, secured by screws 22.

In order to drive the odometer drive gear shaft 14, a drive pawl 17 is provided which is carried on an eccentric shaft portion 14b of the driven gear shaft 14, shown in detail in Figure 13. As shown in Figure 6, the pawl 17 has a tooth 17a for engagement with a register drive gear 18. A conventional indexing ratchet 19 is coupled with the pawl 17 via a spring 20, and a ratchet tooth 19a also engages the odometer register drive gear 18 to ensure that the gear 18 is actuated only a single drive gear tooth for each revolution of the driven gear shaft 14.

As has been mentioned, the weight 15a tends to maintain the odometer mechanism assembly 1, and therefore the odometer register 16, in a stable attitude shown in Figure 4. In the event of the hubodometer being subjected to impact or shock, which would have a tendency to cause the assembly mechanism to rotate, then the weight 15a compresses the springs 15d and 15e, and thereby enables the weight 15a to move away from the centre of rotation of the hubodometer. This weight movement counteracts in a conventional way any tendency for the hubodometer to rotate.

In operation, rotation of the triangular base 7 which is secured to the wheel, causes corresponding rotation of the casing 2 and its worm drive gear 12c. The rotation of the drive gear 12c (which is free of the frame 13) drives the driven gear 14a which rotates the driven gear shaft 14. The longitudinal axis of the shaft 14 is maintained with a generally horizontal attitude because the frame 13 is weighted and is loosely carried on the drive gear shaft 12. In this way, rotation is transmitted to the odometer register via the mechanism previously described.

The hubodometer structure which has been described provides a substantial balancing of weight about the, usually vertical, plane P1 of Figure 3 and the, usually vertical, plane of P2 of Figure 4. This balanced disposition of the mechanism 1 of the odometer substantially eliminates destructive torques caused by shock and vibration forces. In particular, a shock caused by the wheel, to which the hubodometer is attached, when passing over a bump would tend to generate equal clock-wise and counter clockwise torques about both planes P1 and P2 and these forces would cancel out. Accordingly, the invention provides a hubodometer which does not respond destructively to shock and vibration-generated forces.

**Claims**

1. A hubodometer comprising a rotary casing (2) arranged to be secured to a rotary object, and an odometer mechanism (1) mounted in the casing for rotation therewith, characterised by a rotary support (4) defining a cavity (3) within which the casing is located by annular resilient mounting means (5) which surrounds the casing and which is positioned between the casing (2) and the cavity (3), and which serves to transmit rotary motion from the support (4) to the casing (2).

2. A hubodometer as claimed in claim 1 characterised in that the annular resilient mounting means (5) provides the sole location for the casing (2) within the cavity (3).

3. A hubodometer as claimed in claim 2 characterised in that the casing (2) is formed by two joined cup-like shells (2a, 2b), each having a circular flange (2j, 2k), with the flanges (2j, 2k) abutting one another and the annular resilient mounting means (5) being seated on the joined flanges (2j, 2k).

4. A hubodometer as claimed in claim 2 or claim 3 characterised in that a rigid retaining ring (6) surrounds the annular resilient mounting means (5) and is fitted tightly in the cavity (3).

5. A hubodometer comprising a rotary casing (2) arranged to be secured to a rotary object, and an odometer mechanism (1) mounted in the casing for rotation therewith, characterised in that the casing (2) is formed by two joined cup-like shells (2a, 2b) each having a circular flange (2j, 2k) integrally formed at the mouth of the shell (2a, 2b) and lying against the flange (2j, 2k) of the other shell, a resilient gasket (5) seated upon the joined flanges (2j, 2k) and a rigid retainer ring (6) seated on the gasket (5) and fitting tightly into a circular wall of a cavity (3) of a rotary support (4), in order resiliently to support the casing (2) in the cavity (3), and to constitute rotary drive means between the support (4) and the casing (2).

6. A hubodometer assembly comprising a rotary casing (2) arranged to be secured to a rotary object and containing an odometer mechanism (1), characterised in that the casing (2) is·an enclosed structure having a circular peripheral region (2j, 2k), said peripheral region being spaced from a surrounding annular recess in a support (4) which is arranged to be secured to the rotating object, and an annular resilient mount (5) located between said circular peripheral region (2j, 2k), the annular mount (5) providing the sole support for the casing (2) and through which all rotary motion is transmitted between the support (4) and casing (2).

7. A hubodometer as claimed in any one of the preceding claims characterised by a drive gear shaft (12) anchored at its opposite ends to opposite sides of the casing (2), with the longitudinal axis of the shaft (12) aligned with the axis of rotation of the hubodometer, the drive gear shaft (12) carrying the remainder of the odometer mechanism (1).

8. A hubodometer as claimed in claim 7 characterised by a driven gear shaft (14) extending transversely of, and drivingly connected to the drive gear shaft (12), the driven gear shaft (14) being journalled in a frame (13) which carries an odometer register (16) which is driven by the driven gear shaft (14).

**Patentansprüche**

1. Nabenkilometerzähler mit einem drehbaren Gehäuse (2), das an einem drehbaren Gegenstand befestigbar ist, und mit einem Wegstreckenmeßmechanismus (1), der zur Drehung mit dem Gehäuse in diesem angeordnet ist, gekennzeichnet durch einen drehbaren Träger (4), der eine Höhlung (3) bildet, in der das Gehäuse durch eine ringförmige, elastische Montagevorrichtung (5) angeordnet ist, welche das Gehäuse umgibt, zwischen dem Gehäuse (2) und der Höhlung (3) angeordnet ist und dazu dient, die Drehbewegung vom Träger (4) auf das Gehäuse (2) zu übertragen.

2. Nabenkilometerzähler nach Anspruch 1, dadurch gekennzeichnet, daß die ringförmige elastische Montagevorrichtung (5) die einzige Festlegung des Gehäuses (2) in der Höhlung (3) bildet.

3. Nabenkilometerzähler nach Anspruch 2, dadurch gekennzeichnet, daß das Gehäuse (2) aus zwei miteinander verbundenen becherförmigen Schalen (2a, 2b) gebildet ist, die jeweils einen kreisförmigen Flansch (2j, 2k) aufweisen, wobei die Flansche (2j, 2k) aneinander anliegen und die ringförmige elastische Montagevorrichtung (5) auf den miteinander verbundenen Flanschen (2j, 2k) sitzt.

4. Nabenkilometerzähler nach Anspruch 2 oder 3, dadurch gekennzeichnet, daß ein starrer Rückhaltering (6) die ringförmige elastische Montagevorrichtung (5) umgibt und eng in die Höhlung (3) eingepaßt ist.

5. Nabenkilometerzähler mit einem drehbaren Gehäuse (2), das an einem dehbaren Gegenstand befestigbar ist, und einem Wegstreckenmeßmechanismus (1), der zur Drehung mit dem Gehäuse in diesem montiert ist, dadurch gekennzeichnet, daß das Gehäuse (2) aus zwei miteinander verbundenen becherförmigen Schalen (2a, 2b) gebildet ist, die jeweils einen kreisförmigen Flansch (2j, 2k) aufweisen, der einstückig an der Öffnung der betreffenden Schale (2a, 2b) gebildet ist und am Flansch (2j, 2k) der anderen Schale anliegt, daß eine elastische Dichtung (5) auf den miteinander verbundenen Flanschen (2j, 2k) sitzt und ein starrer Rückhaltering (6) auf der Dichtung (5) sitzt und eng in eine kreisförmige Wand einer Höhlung (3) eines drehbaren Trägers (4) eingepaßt ist, um das Gehäuse (2) in der Höhlung (3) elastisch zu haltern und eine Drehantriebsvorrichtung zwischen dem Träger (4) und dem Gehäuse (2) zu bilden.

6. Nabenkilometerzähler mit einem drehbaren Gehäuse (2), das an einem rotierenden Gegenstand anbringbar ist und einen Wegstreckenmeßmechanismus (1) enthält, dadurch gekennzeichnet, daß das Gehäuse (2) eine geschlossene Struktur ist, welche einen kreisförmigen Umfangsbereich (2j, 2k) aufweist, der von einer umgebenden, ringförmigen Vertiefung in einem Träger (4) beabstandet ist, welcher an dem rotierenden Gegenstand anbringbar ist, und daß eine ringförmige elastische Halterung (5) zwischen dem kreisförmigen Umfangsbereich (2j, 2k) angeordnet ist, welche die alleinige Lagerung für das Gehäuse (2) bildet und durch welche die ganze Drehbewegung zwischen dem Träger (4) und dem Gehäuse (2) übertragen wird.

7. Nabenkilometerzähler nach einem der vorhergehenden Ansprüche, gekennzeichnet durch eine Antriebsgetriebewelle (12), die an ihren entgegengesetzten Enden an entgegengesetzten Seiten des Gehäuses (2) verankert ist, wobei die Längsachse der Welle (4) mit der Drehachse des Nabenkilometerzählers fluchtet und die Antriebsgetriebewelle (12) den Rest des Wegstreckenmeßmechanismus (1) trägt.

8. Nabenkilometerzähler nach Anspruch 7, gekennzeichnet durch eine angetriebene Getriebewelle (14), welche quer zur Antriebsgetriebewelle (12) verläuft, antriebsmäßig mit dieser verbunden und in einem Rahmen (13) drehbar gelagert ist, welcher ein Wegstreckenmeß-Register (16) trägt, das durch die angetriebene Getriebewelle (14) angetrieben wird.

**Revendications**

1. Hodomètre de moyeu comportant un boîtier tournant (2) conçu pour être fixé sur un objet tournant et un mécanisme d'hodomètre (1) monté dans le boîtier pour tourner avec lui, caractérisé par un support tournant (4) définissant une cavité (3) à l'intérieur de laquelle le boîtier est placé par l'intermédiaire d'un moyen (5) qui forme monture élastique annulaire, qui entoure le boîtier et qui est positionné entre le boîtier (2) et la cavité (3) et qui sert à transmettre le mouvement de rotation provenant du support (4) au boîtier (2).

2. Hodomètre de moyeu selon la revendication 1, caractérisé en ce que le moyen (5) qui forme monture élastique annulaire fournit l'unique localisation pour le boîtier (2) à l'intérieur de la cavité (3).

3. Hodomètre de moyeu selon la revendication 2, caractérisé en ce que le boîtier (2) est formé par deux coques en forme de coupelle réunies (2a, 2b), chacune présentant un flasque circulaire (2j, 2k), les flasques (2j, 2k) s'aboutant l'un contre l'autre et le moyen (5) qui forme monture élastique annulaire ayant son assise sur les flasques réunis (2j, 2k).

4. Hodomètre de moyeu selon la revendication 2 ou la revendication 3, caractérisé en ce qu'une bague de retenue rigide (6) entoure le moyen (5) qui forme monture élastique annulaire et vient à ajustement serré dans la cavité (3).

5. Hodomètre de moyeu comportant un boîtier tournant (2) conçu pour être fixé sur un objet tournant et un mécanisme d'hodomètre (1) monté dans le boîtier pour tourner avec lui, caractérisé en ce que le boîtier (2) est formé par deux coques en forme de coupelle réunies (2a, 2b), chacune présentant un flasque circulaire (2j, 2k) venu de forme, d'une pièce, à l'embouchure de la coque (2a, 2b) et reposant contre le flasque (2j, 2k) de l'autre coque, par un joint élastique (5) qui a son assise sur les flasques réunis (2j, 2k) et par une bague de retenue rigide (6) qui a son assise sur le joint (5) et qui vient à ajustement serré dans une paroi circulaire d'une cavité (3) d'un support tournant (4), pour supporter élastiquement le boîtier (2) dans la cavité (3) et constituer un moyen d'entraînement tournant entre le support (4) et le boîtier (2).

6. Ensemble formant hodomètre de moyeu comportant un boîtier tournant (2) qui est conçu pour être fixé sur un objet tournant et contient un mécanisme d'hodomètre (1), caractérisé en ce que le boîtier (2) est une structure fermée présentant une région périphérique circulaire (2j, 2k), ladite région périphérique étant espacée d'une saignée annulaire qui l'entoure dans un support (4) qui est conçu pour être fixé à l'objet tournant, ainsi qu'une monture élastique annulaire (5) placée entre ladite région périphérique circulaire (2j, 2k), la monture annulaire (5) fournissant l'unique support pour le boîtier (2) et tout le mouvement tournant étant transmis, entre le support (4) et le boîtier (2), par l'intermédiaire de cette monture.

7. Hodomètre de moyeu selon l'une quelconque des revendications précédentes, caractérisé par un arbre de pignon d'entraînement (12) encastré à ses extrémités opposées dans les faces opposées du boîtier (2), l'axe longitudinal de l'arbre (12) étant aligné avec l'axe de rotation de l'hodomètre de moyeu, l'arbre du pignon d'entraînement (12) portant le reste du mécanisme (1) de l'hodomètre.

8. Hodomètre de moyeu selon la revendication 7, caractérisé par un arbre de pignon entraîné (14) qui s'étend transversalement à l'arbre de pignon d'entraînement (12) et qui lui est relié par entraînement positif, l'arbre du pignon entraîné (14) tourillonnant dans un châssis (13) qui porte un enregistreur d'hodomètre (16) entraîné par l'arbre du pignon entraîné (14).

FIG.1

FIG.2

1

FIG.3

FIG. 4

FIG. 5

FIG. 6

FIG. 7

FIG.8

FIG.9

FIG.10

FIG.12

FIG.13

FIG.11

0 083 243